# EUROPEAN PATENT APPLICATION

(11) **EP 4 354 599 A1**
(43) Date of publication of application: **17.04.2024**
(21) Application number: 23192897.9
(22) Date of filing: 23.08.2023
(51) Int. Cl.: H01M 50/103, H01M 50/15, H01M 50/176, H01M 50/477, H01M 50/536, H01M 50/538, H01M 50/54, H01M 50/548, H01M 50/553, H01M 50/557, H01M 50/566, H01M 50/627

(54) **SECONDARY BATTERY**

(30) Priority: 13.10.2022 KR 20220131082
(71) Applicant: Samsung SDI Co., Ltd., Yongin-si, Gyeonggi-do 17084 (KR)
(72) Inventor: Lee, Hyun Soo, 17084 Yongin-si, Gyeonggi-do (KR)
(74) Representative: Gulde & Partner

(57) **Abstract**

A secondary battery (100) includes: an electrode assembly (110) having a first electrode tab and a second electrode tab respectively exposed at opposite sides thereof; a case (160) accommodating the electrode assembly (110) and having two open sides; a first cap plate (171) sealing one of the two open sides of the case (160) and having an electrolyte injection hole; a first terminal (130) electrically connected to the first electrode tab and exposed to the outside of the first cap plate (171); and a first insulating member (175) interposed between the first cap plate (171) and the electrode assembly (110) and having a through hole at a side corresponding to the electrolyte injection hole.

## Description

### BACKGROUND

### 1. Field

Aspects of embodiments of the present invention relate to a secondary battery.

### 2. Description of the Related Art

A secondary (or rechargeable) battery is a power storage system (or device) that provides excellent energy density by converting electrical energy into chemical energy and storing the same. Compared to non-rechargeable (or primary) batteries, secondary batteries are rechargeable and are widely used in IT devices, such as smart phones, cellular phones, notebooks, and tablet PCs. Recently, interest in electric vehicles has increased to reduce or prevent environmental pollution, and accordingly, high-capacity secondary batteries are being used to power electric vehicles. Such secondary batteries must have certain characteristics, such as high density, high power, and stability.

The above information disclosed in this Background section is for enhancement of understanding of the background of the present invention, and therefore, it may contain information that does not constitute prior art.

### SUMMARY

Embodiments of the present invention provide a secondary battery including an insulating member interposed between a cap plate and an electrode assembly to reduce or prevent movement of an electrode assembly and so that an electrolyte can be easily injected.

A secondary battery, according to an embodiment of the present invention, includes: an electrode assembly having a first electrode tab and a second electrode tab respectively exposed at opposite sides thereof; a case accommodating the electrode assembly and having two open sides; a first cap plate sealing one of the two open sides of the case and having an electrolyte injection hole; a first terminal electrically connected to the first electrode tab and exposed to the outside of the first cap plate; and a first insulating member interposed between the first cap plate and the electrode assembly and having a through hole at a side corresponding to the electrolyte injection hole.

The secondary battery may further include a first current collector electrically connecting the first electrode tab exposed at one side of the electrode assembly and the first terminal.

The first current collector may include at least one of: a first electrode connection part contacting and coupled to a first electrode tab exposed at one side of the electrode assembly; and a first terminal connection part having one end coupled to the first electrode connection part by welding and another end coupled to the first terminal by welding.

The first electrode connection part may be a metal plate extending along a first direction and may include at least one of: a first connection part welded in contact with one side of the electrode assembly; and a first center part bent from the first connection part, protruding toward the first cap plate compared to the first connection part, and spaced apart from one side surface of the electrode assembly.

The first connection part may be on both sides of the first electrode connection part in the first direction around the first center part.

The first insulating member may further include first fixing protrusions protruding toward the first current collector. The first fixing protrusions may be fixing hooks, and the first fixing protrusions may be hooked and fixed at both sides of the first center part.

The first insulating member may include at least one of: first body parts on both sides in the first direction around an opening hole penetrating the first terminal connection part and interposed between the first connection part and the first cap plate; first support parts having a height in a second direction along outer peripheries of the first body parts; first side parts connected between the first support parts and on both sides of the opening hole in a third direction; and the first fixing protrusions protruding from the first side parts toward the first current collector.

The first body parts, on both sides, may have a through hole.

The first terminal may include at least one of: a first inner terminal plate inside the first cap plate; a first outer terminal plate outside the first cap plate; and a first terminal pillar coupled to the first inner terminal plate from the inside of the first cap plate. The first terminal pillar may extend through the first cap plate, and may be coupled to the first outer terminal plate from the outside of the first cap plate.

A first inner insulating member may be interposed between the first inner terminal plate and the first cap plate.

A first outer insulating member may be interposed between the first outer terminal plate and the first cap plate.

A first seal gasket may be interposed between the first terminal pillar and the first cap plate to seal a space between the first terminal and the first cap plate.

The secondary battery may further include at least one of: a second cap plate sealing the other one of the two open sides of the case; a second terminal electrically connected to the second electrode tab and exposed to an outside of the second cap plate; and a second current collector electrically connecting the second electrode tab and the second terminal.

The secondary battery may be configured such that, in a state in which long side surfaces of the plurality of secondary batteries face each other, the first terminals and/or second terminals of the secondary batteries, respectively exposed to both sides, are electrically connected.

A plurality of electrode assemblies may be stacked such that long sides of the electrode assemblies are adjacent to each other and accommodated in the case.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view of a secondary battery according to an embodiment of the present invention.
FIG. 2 is a cross-sectional view of the secondary battery shown in FIG. 1 taken along the line 2-2'.
FIG. 3 is an enlarged partial cross-sectional view showing the portion 3 in FIG. 2.
FIGS. 4A and 4B are perspective views showing configurations in which first and second current collectors are coupled to an electrode assembly of the secondary battery shown in FIG. 1.
FIGS. 5A and 5B are perspective views showing before and after a first insulating member is coupled to one end of the electrode assembly shown in FIG. 4B.
FIG. 6 is a cross-sectional view taken along the line 6-6' of FIG. 5B.
FIG. 7 is a plan view of a first insulating member shown in FIG. 5B.

### DETAILED DESCRIPTION

Hereinafter, embodiments of the present invention will be described, in detail, with reference to the accompanying drawings.

Embodiments of the present invention are provided to more fully describe the present invention to those skilled in the art, and the following embodiments may be embodied in many different forms and should not be construed as being limited to the examples set forth herein. Rather, these embodiments are provided so that this invention will be thorough and complete and will convey the aspects and features of the present invention to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

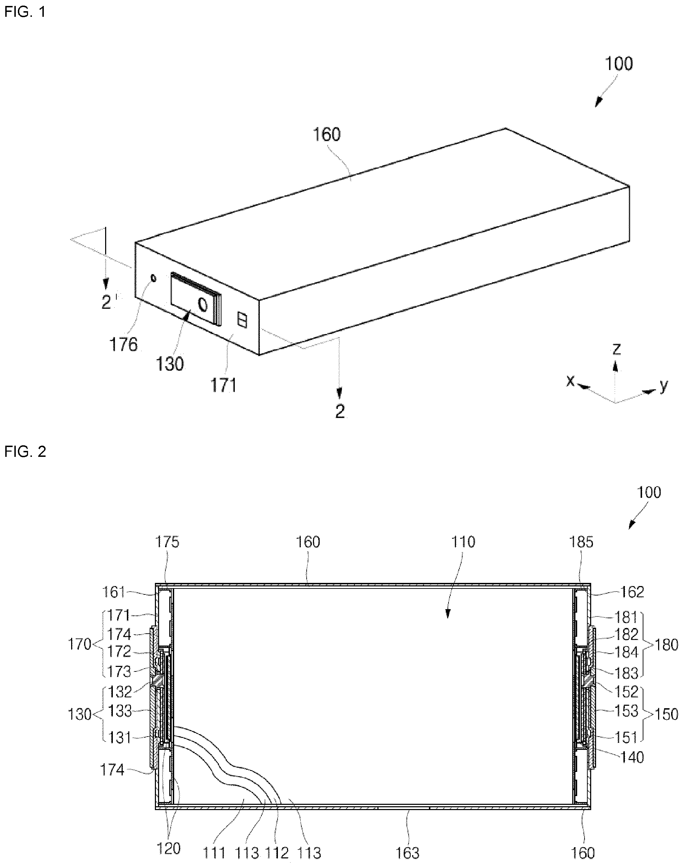

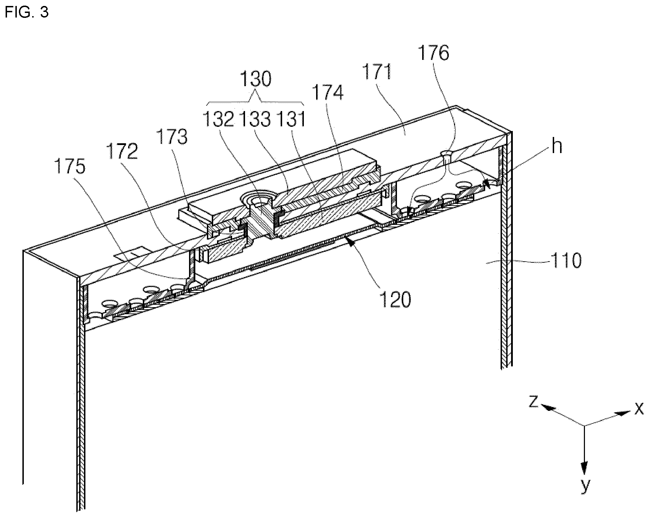

Referring to FIG. 1, a perspective view of a secondary battery according to an embodiment of the present invention is shown. Referring to FIG. 2, a cross-sectional view of the secondary battery shown in FIG. 1 taken along line 2-2' is shown. Referring to FIG. 3, an enlarged partial cross-sectional view showing the portion 3 in FIG. 2 is shown. The secondary battery shown in FIG. 3 may correspond to a cutaway perspective view of the secondary battery shown in FIG. 1, viewed in another direction. Hereinafter, the description of the secondary battery 100 of the present invention will be made on the basis of the structure of the secondary battery 100 shown in FIG. 1.

As shown in FIGS. 1 to 3, the secondary battery 100 may include an electrode assembly 110, a first current collector 120, a first terminal 130, a second current collector 140, a second terminal 150, a case 160, a first cap assembly 170, and a second cap assembly 180.

The electrode assembly 110 may be formed by winding or stacking a stack of a first electrode plate 111, a separator 113, and a second electrode plate 112, which are formed in a thin plate shape or film shape. When the electrode assembly 110 is a wound stack, a winding axis may be parallel to the longitudinal direction (e.g., the y direction) of the case 160. In addition, the electrode assembly 110 may be a stack type rather than a winding type, and the shape of the electrode assembly 110 is not limited in the present invention. In addition, a plurality of electrode assemblies 110 may be stacked such that long sides of the electrode assemblies 110 are adjacent to each other and accommodated in the case 160. The number of electrode assemblies 110 is not limited in the present invention.

The first electrode plate 111 of the electrode assembly 110 may act as a negative electrode, and the second electrode plate 112 may act as a positive electrode. However, the present invention is not limited thereto, and the reverse is also possible.

The first electrode plate 111 may be formed by applying a first electrode active material, such as graphite or carbon, to a first electrode current collector formed of a metal foil, such as copper, a copper alloy, nickel, or a nickel alloy, and may include a first electrode tab (e.g., a first uncoated portion) that is a region to which the first electrode active material is not applied. The first electrode tab may act as a current flow path between the first electrode plate 111 and the first current collector 120. In some embodiments, when the first electrode plate 111 is manufactured, the first electrode tab may be formed by being cut to protrude to one side and may protrude at one side more than (e.g., may protrude beyond) the separator 113 without separate cutting.

The second electrode plate 112 may be formed by applying a second electrode active material, such as a transition metal oxide, on a second electrode current collector formed of a metal foil, such as aluminum or an aluminum alloy, and may include a second electrode tab (e.g., a second uncoated portion) that is a region to which the second electrode active material is not applied. The second electrode tab may act as a current flow path between the second electrode plate 112 and the second current collector 140. In some embodiments, the second electrode tab may be formed by being cut to protrude to the other side (e.g., to the opposite side as the first electrode tab) when the second electrode plate 112 is manufactured and may protrude to the other side more than (e.g., may protrude beyond) the separator 113 without separate cutting.

In some embodiments, the first electrode tab may be located on the left short side of the electrode assembly 110 (e.g., in a plan view), and the second electrode tab may be located on the right short side of the electrode assembly 110 (e.g., in a plan view). Herein, the left and right sides are referred to for convenience of explanation and are based on the orientation of the secondary battery 100 as shown in FIGS. 1 and 2. Accordingly, such positions of the secondary battery 100 would vary when the secondary battery 100 is rotated left and right or up and down, and such terms should be understood to vary accordingly. Hereinafter, various components will be described on the basis of the secondary battery 100 shown in FIGS. 1 to 3.

In some embodiments, the separator 113 is positioned between the first electrode plate 111 and the second electrode plate 112 to prevent a short circuit while enabling movement of lithium ions. The separator 113 may include polyethylene, polypropylene, or a composite film of polyethylene and polypropylene. In some embodiments, the separator 113 may be replaced with an inorganic solid electrolyte, such as a sulfide, oxide, or phosphate compound that does not require a liquid or gel electrolyte.

The first electrode tab of the first electrode plate 111 and the second electrode tab of the second electrode plate 112 are respectively positioned at both ends (e.g., opposite ends) of the electrode assembly 110. In some embodiments, the electrode assembly 110 may be accommodated in the case 160 together with an electrolyte. The electrolyte may include (or contain) a lithium salt, such as LiPF₆ or LiBF₄, in an organic solvent, such as EC, PC, DEC, EMC, or DMC. The electrolyte may be in a liquid or gel phase. In some embodiments in which an inorganic solid electrolyte is used, the electrolyte (e.g., the liquid or gel electrolyte) may be omitted.

In the electrode assembly 110, the first current collector 120 and the second current collector 140 are welded and connected to the first electrode tab of the first electrode plate 111 and the second electrode tab of the second electrode plate 112, which are exposed to both sides, respectively.

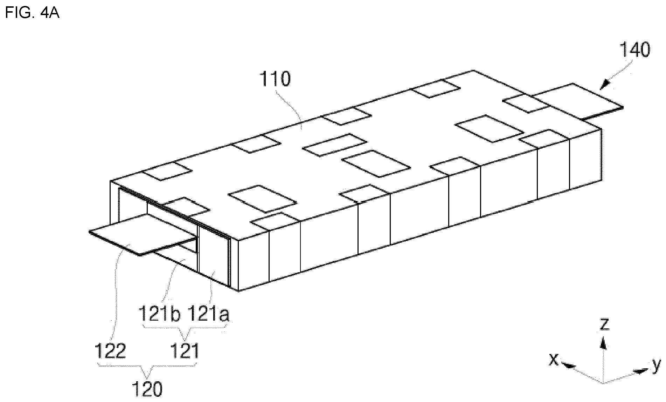

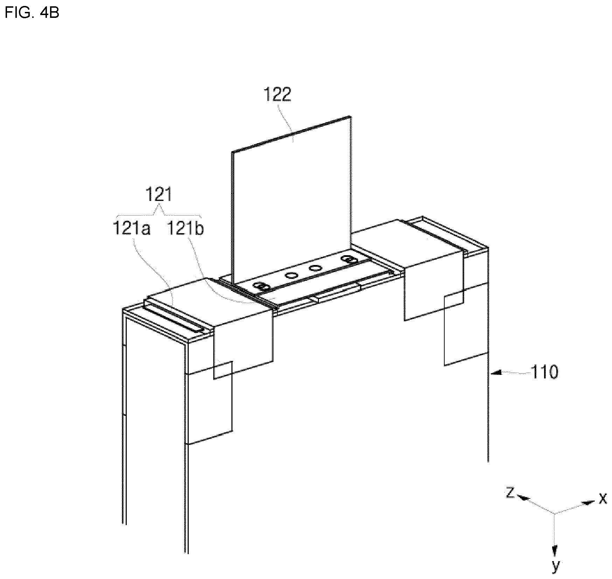

The first current collector 120 is made of metal and may electrically connect the first electrode plate 111 and the first terminal 130. FIG. 4A is a perspective view showing a configuration in which the first current collector 120 and the second current collector 140 are coupled to the electrode assembly 110. FIG. 4B is a perspective view illustrating a coupling relationship between the electrode assembly 110 and the first current collector 120 shown in FIG. 4A viewed in another direction. Hereinafter, the configuration and coupling relationship of the first current collector 120 will be described with reference to FIGS. 4A and 4B.

The first current collector 120 may include a first electrode connection part 121 contacting and coupled to the first electrode tab (e.g., the uncoated portion) of the first electrode plate 111 and a first terminal connection part 122 contacting and coupled to the first terminal 130. The first current collector 120 may be made of copper or a copper alloy.

The first electrode connection part 121 extends along a first direction (e.g., the x direction). The first direction is the longitudinal direction of a first cap plate 171, which is at a side of the electrode assembly 110 and may have a substantially plate shape. The first electrode connection part 121 may be coupled through welding in a state of being in contact with one end of the electrode assembly 110 and may have the same first polarity as the first electrode plate 111. Hereinafter, for convenience of explanation, a surface of the first electrode connection part 121 facing one side of the electrode assembly 110 is referred to as an inner surface, and a surface thereof facing the first cap plate 171 is referred to as an outer surface.

The first electrode connection part 121 has a substantially plate shape and may include first connection parts 121a provided on both sides in the first direction (e.g., the x direction) around the first center part 121b.

The first connection part 121a may be coupled to the first electrode plate 111 by welding in a state in which an inner surface is in contact with one side surface of the electrode assembly 110. The first connection part 121a may be recessed in a direction toward the electrode assembly 110 compared to the first center part 121b. With this structure, the first connection part 121a may be easily brought into contact with the uncoated portion of the first electrode plate 111 and, thus, welding can be facilitated.

Compared to the first connection part 121a, the first center part 121b may protrude in an outward direction at where the first cap plate 171 is located. The first center part 121b may be spaced apart from one side of the electrode assembly 110. In addition, the first terminal connection part 122 may be coupled to the outer surface of the first center part 121b by welding.

The first terminal connection part 122, which is a metal plate, may be easily bent and has one end coupled to the first center part 121b of the first electrode connection part 121 by welding. The first terminal connection part 122 may extend along a second direction (e.g., the y direction). After being coupled to the first terminal 130, the first terminal connection part 122 may be bent to be accommodated inside the case 160 and interposed between the first cap plate 171 and the electrode assembly 110. The other end of the first terminal connection part 122 may be coupled to the first terminal 130 by welding.

The first terminal 130 is made of a metal and may be in contact with and welded to the first terminal connection part 122 of the first current collector 120 to be electrically connected thereto. In some embodiments, the first terminal 130 may include a first inner terminal plate 131, a first terminal pillar 132, and a first outer terminal plate 133. The first terminal 130 may be made of the same metal as the first current collector 120.

The first inner terminal plate 131 may be positioned inside (or under) the first cap plate 171, and the first outer terminal plate 133 may be positioned outside (or over) the first cap plate 171. The first terminal pillar 132 may penetrate (e.g., may extend through) the first cap plate 171 to be coupled to the first outer terminal plate 133 at the outer side of the first cap plate 171 and may be coupled to the first inner terminal plate 131 at the inner side of the first cap plate 171.

A first inner insulating member 172 may be interposed between the first inner terminal plate 131 and the first cap plate 171, and a first outer insulating member 174 may be interposed between the first outer terminal plate 133 and the first cap plate 171. In addition, a first seal gasket 173 may be further interposed between the first terminal pillar 132 and the first cap plate 171 to seal a space between the first terminal 130 and the first cap plate 171.

The first inner terminal plate 131 may be in contact with and coupled to the other side of the first current collector 120 on one side (e.g., the right side). The first inner terminal plate 131 may have a terminal hole (e.g., a terminal opening) penetrating between one surface and the other surface. The terminal hole may be formed to correspond to a diameter of the first terminal pillar 132. The terminal hole may be positioned approximately at the center of the first inner terminal plate 131.

The first terminal pillar 132 may be inserted into the terminal hole in the first inner terminal plate 131 and coupled thereto. For example, the first terminal pillar 132 may be fixed on one surface by riveting or/and welding in a state of being inserted into the terminal hole in the first inner terminal plate 131. The first terminal connection part 122 of the first current collector 120 may be coupled to one surface of the first inner terminal plate 131, coupled to the first terminal pillar 132, by welding.

The first outer terminal plate 133 may have a terminal hole (e.g., a terminal opening) penetrating between one surface and the other surface. The terminal hole may be located approximately at the center of the first outer terminal plate 133.

The first terminal pillar 132 may be inserted into the terminal hole of the first outer terminal plate 133 and coupled thereto. For example, the first terminal pillar 132 may be fixed by riveting or/or welding in a state of being inserted into a terminal hole in the first outer terminal plate 133 outside the first cap plate 171. The first outer insulating member 174 made of an insulating material may be interposed between one surface of the first outer terminal plate 133 and the first cap plate 171 for insulation.

The first terminal pillar 132, having a pillar shape, may penetrate the first cap plate 171. The first terminal pillar 132 may have a flange formed outside the first cap plate 171 to prevent the first terminal pillar 132 from falling out of the first cap plate 171. The first terminal pillar 132 may be inserted into the terminal hole in the first outer terminal plate 133 from the outside and coupled to the terminal hole in the first outer terminal plate 133 around the first cap plate 171 and may be inserted into the terminal hole in the first inner terminal plate 131 from the inside and coupled thereto. The flange may be located between the first outer terminal plate 133 and the first cap plate 171.

The first terminal 130, that is, the first inner terminal plate 131, the first terminal pillar 132, and the first outer terminal plate 133, may be made of copper or a copper alloy. In the first terminal 130, portions of the first outer terminal plate 133 and the first terminal pillar 132 may be exposed to protrude outside the first cap plate 171. In addition, in the first terminal 130, a portion of the first terminal pillar 132 and the first inner terminal plate 131 may be located inside the case 160, which is the inside of (or under) the first cap plate 171. In addition, the first terminal 130 may be electrically connected to the first current collector 120 inside the case 160.

The second current collector 140 is made of metal and may electrically connect the second electrode plate 112 and the second terminal 150. The second current collector 140 is a metal plate and may include a second electrode connection part 141 contacting and coupled to the second electrode tab of the second electrode plate 112 and a second terminal connection part 142 contacting and coupled to the second terminal 150. The second current collector 140 may be coupled to the electrode assembly 110 and the second terminal 150 in a form symmetrical to that of the first current collector 120 on the basis of the electrode assembly 110. The second current collector 140 may be made of aluminum or an aluminum alloy.

The second terminal 150 is made of a metal and may be in contact with and welded to the second current collector 140. In some embodiments, the second terminal 150 may include a second inner terminal plate 151, a second terminal pillar 152, and a second outer terminal plate 153.

The second inner terminal plate 151 may be positioned inside (or under) the second cap plate 181. A second inner insulating member 182 may be interposed between the second outer terminal plate 153 and the second cap plate 181. A second seal gasket 183 may be interposed between the second terminal pillar 152 and the second cap plate 181 and between the second inner terminal plate 151 and the second cap plate 181. The second terminal pillar 152 may penetrate (or extend through) the second cap plate 181, may be coupled to the second outer terminal plate 153 at the outside of the second cap plate 181, and may be coupled to the second inner terminal plate 151 at the inner side of the second cap plate 181.

The second terminal 150 may be the same as the first terminal 130 in terms of shape and structure. However, the second terminal 150 may be coupled to the electrode assembly 110 through the second current collector 140 in a form symmetrical to the first terminal 130 based on the electrode assembly 110. The second terminal 150 may be made of aluminum or an aluminum alloy.

The case 160 has a substantially hollow rectangular parallelepiped shape having openings 161 and 162 formed at both sides. The electrode assembly 110, coupled to the first current collector 120 and the second current collector 140, may be inserted into the case 160 through the openings 161 and/or 162.

The case 160 may have rectangular upper and lower surfaces extending along the second direction (e.g., the y direction), which is the longitudinal direction of the case 160, and two rectangular long sides connecting (or extending between) the long sides of the upper and lower surfaces and extending along the second direction. The case 160 may have an upper surface, a lower surface, and two long side surfaces integrally formed.

The case 160 may have a vent hole penetrating the long side surfaces. A safety vent 163 may be installed in the vent hole in the case 160. The safety vent 163 may have a notch so that it can be opened (e.g., so that it breaks or bursts) at a set pressure because it is thinner than other regions of the safety vent 163.

The first cap assembly 170 may be coupled to the left opening 161 in the case 160. In some embodiments, the first cap assembly 170 may include the first cap plate 171, the first inner insulating member 172, the first seal gasket 173, the first outer insulating member 174, and a first insulating member 175.

The first cap plate 171, having a flat rectangular plate shape, may seal the left opening 161 in the case 160. The first cap plate 171 may have a terminal hole (e.g., a terminal opening) penetrating between an outer surface and an inner surface thereof and an electrolyte injection hole (or opening). The first terminal pillar 132 of the first terminal 130 may penetrate the terminal hole in the first cap plate 171 to be coupled to the first inner terminal plate 131 and the first outer terminal plate 133. In addition, the electrolyte injection hole may be sealed by a plug 176 after the first cap plate 171 is coupled to the case 160 and the electrolyte is injected into the case 160.

The first inner insulating member 172 may be interposed between the inner surface of the first cap plate 171 and the first inner terminal plate 131. The first inner insulating member 172 may be in close contact with the inner surface of the first cap plate 171 and may also be in close contact with the first seal gasket 173. The first inner insulating member 172 may be made of an insulating material and may insulate the first cap plate 171 and the first inner terminal plate 131 from each other.

In addition, the first seal gasket 173, made of an insulating material, may be arranged between the first cap plate 171 and the first terminal pillar 132 to seal a space between the first cap plate 171 and the first terminal pillar 132. For example, the first seal gasket 173 may be interposed between the first cap plate 171 and the first terminal pillar 132. The first seal gasket 173 may prevent external moisture from penetrating into the secondary battery 100 and/or may prevent an electrolyte in the secondary battery 100 from leaking to the outside. One side of the first seal gasket 173 may be in contact with the first outer insulating member 174, and the other side thereof may be in contact with the first inner insulating member 172.

The first outer insulating member 174 may be interposed between the outer surface of the first cap plate 171 and the first outer terminal plate 133. The first outer insulating member 174 may be in close contact with the first cap plate 171 and may also be in close contact with the flange of the first terminal pillar 132. The first outer insulating member 174 may be made of an insulating material and may insulate the first cap plate 171 and the first outer terminal plate 133 from each other.

The first cap plate 171 may be electrically separated from the first terminal 130 by the first inner insulating member 172, the first seal gasket 173, and the first outer insulating member 174.

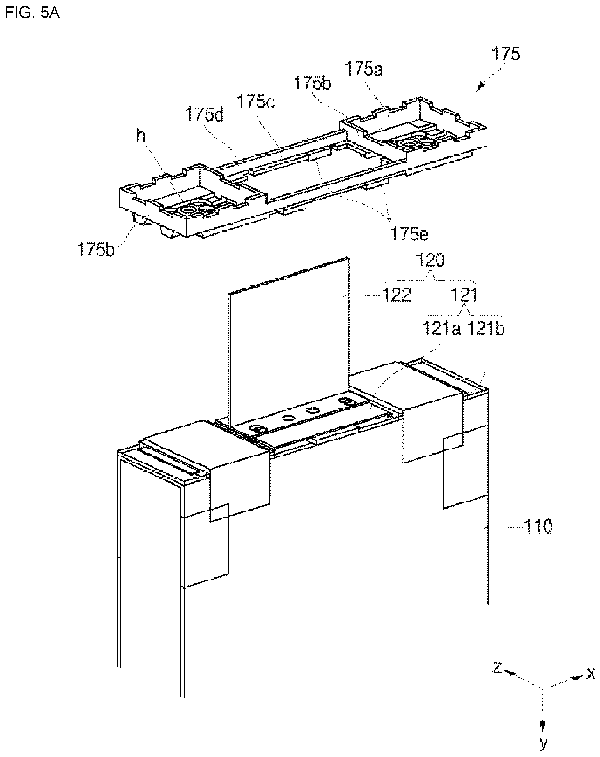

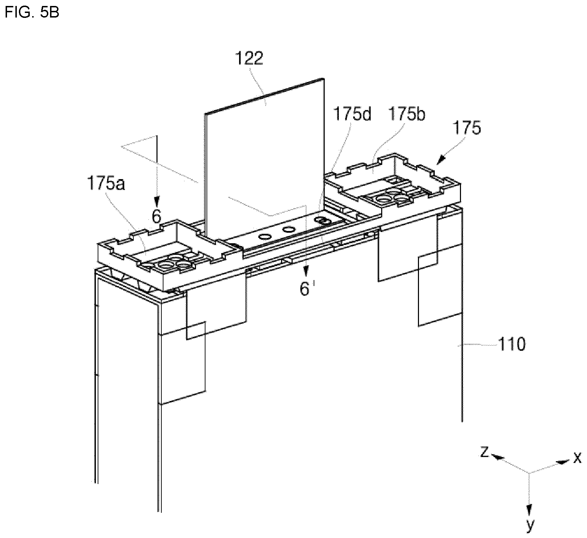

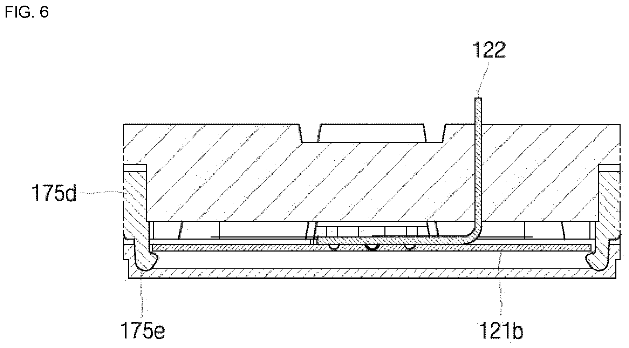

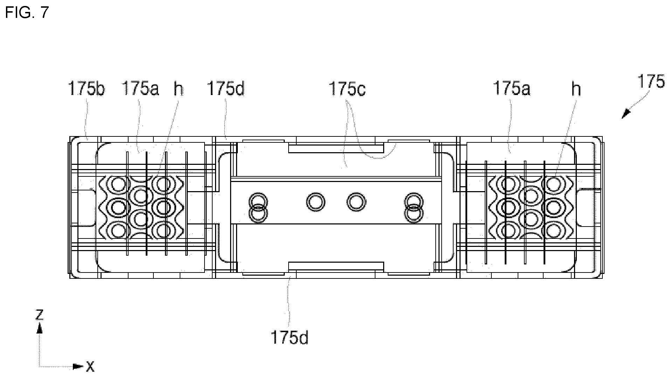

The first insulating member 175 may be interposed between the first cap plate 171 and the electrode assembly 110. The first insulating member 175 may be made of an insulating material and may prevent one side of the electrode assembly 110 from electrically contacting the first cap plate 171. FIGS. 5A and 5B are perspective views showing states before and after the first insulating member 175 is coupled to one end of the electrode assembly 110. In addition, FIG. 6 shows a cross-sectional view taken along the line 6-6' of FIG. 5B. FIG. 7 is a plan view of the first insulating member 175. Hereinafter, the structure of the first insulating member 175 will be described with reference to FIGS. 5A, 5B, 6, and 7.

The first insulating member 175 may have flat plate-shaped first body parts 175a and first support parts 175b extending from the first body parts 175a in the second direction (e.g., the y direction).

The first body parts 175a may be coupled to the electrode assembly 110 to cover the first electrode connection part 121 of the first current collector 120. The first body parts 175a may be positioned in a divided form on both sides of an opening hole (e.g., an opening) 175c along the first direction (e.g., the x direction). For example, in one embodiment, two first body parts 175a are provided in the first insulating member 175 and may be located on both sides of the opening hole 175c along the first direction (e.g., the x direction). The first body parts 175a may be located between the first connection part 121a of the first electrode connection part 121 of the first current collector 120 and the first cap plate 171, and the opening hole 175c may be interposed between the first center part 121b of the first electrode connection part 121 of the first current collector 120 and the first terminal 130.

The first body parts 175a may cover the first connection part 121a of the first electrode connection part 121 of the first current collector 120 and may expose the first center part 121b and the first terminal connection part 122 of the first electrode connection part 121 of the first current collector 120 through the opening hole 175c. In addition, the first terminal connection part 122 of the first current collector 120 may penetrate the first insulating member 175 through the opening hole 175c to be connected to the first terminal 130.

The first body parts 175a may have a plurality of through holes h. In one embodiment, the plurality of through holes h may be positioned to correspond to the position of the electrolyte injection hole of the first cap plate 171 only in the first body parts 175a of the first body parts 175a provided on both sides. When an electrolyte is injected through the first cap plate 171, the first insulating member 175 may allow the electrolyte to be easily moved into the electrode assembly 110 through the plurality of through holes h. The plurality of through holes h may be provided on the first body parts 175a at both sides of the first insulating member 175.

The first support parts 175b may be provided in the shape of a square ring along the outer peripheries of the first body parts 175a at both sides. The first support parts 175b may be provided to have a height in the second direction (e.g., the y direction), which is a direction from the first body parts 175a toward the first cap plate 171. Here, the height of the first support parts 175b may be the same as a separation distance between the first current collector 120 mounted on the electrode assembly 110 and the first cap plate 171. Accordingly, the first support parts 175b of the first insulating member 175 may prevent the electrode assembly 110 from moving inside the case 160 along the second direction (e.g., the y direction).

The first insulating member 175 may include a pair of first side parts 175d connecting and fixing the first support parts 175b at both sides. The pair of first side parts 175d may extend along the first direction (e.g., the x direction) to connect the first support parts 175b at both sides. The pair of first side parts 175d may be located at both sides of the opening hole 175c in a third direction (e.g., the z direction). In the first insulating member 175, the first body parts 175a may be positioned at both sides of the opening hole 175c by the first side parts 175d. The first side parts 175d may have a height along the second direction (e.g., the y direction), and the height of the first side parts 175d may be equal to or smaller than the height of the first support parts 175b.

The first insulating member 175 may include first fixing protrusions 175e protruding from the first side parts 175d to sides adjacent to the first current collector 120. The first fixing protrusions 175e may be fixing hooks, and one pair or two pairs of the first fixing protrusions 175e may be provided to be symmetrical to the first side parts 175d at both sides. The first fixing protrusions 175e may be coupled to the first center part 121b of the first current collector 120. For example, the hook-shaped first fixing protrusions 175e may be coupled to the first center part 121b spaced apart from one side of the electrode assembly 110. The first insulating member 175 may be fixed to the first current collector 120 by the first fixing protrusions 175e.

After the electrode assembly 110, to which the first current collector 120 is coupled, is accommodated in the case 160, the first cap plate 171, which is coupled to the first terminal 130, may seal the opening 161 in the case 160 after the first insulating member 175 is coupled to the first current collector 120. Before the first cap plate 171 seals the case 160, the first terminal connection part 122 of the first current collector 120 and the first inner terminal plate 131 of the first terminal 130 may be coupled to each other by welding. After the first current collector 120 and the first terminal 130 are coupled to each other, the first terminal connection part 122 of the first current collector 120 may be bent to be easily coupled to the opening 161 in the case 160.

The second cap assembly 180 may be coupled to the right opening 162 in the case 160. In some embodiments, the second cap assembly 180 may include the second cap plate 181, the second inner insulating member 182, a second seal gasket 183, a first outer insulating member 184, and a first insulating member 185. The second cap assembly 180 may be the same as the first cap assembly 170 in terms of shape and structure. In addition, the coupling shape and structure of the second cap assembly 180 and the second terminal 150 may be the same as those of the first cap assembly 170 and the first terminal 130. For example, the coupling shape of the second cap assembly 180 and the second terminal 150 may be symmetrical with the coupling shape of the first cap assembly 170 and the first terminal 130 on the basis of the case 160.

In the secondary battery 100, the first cap assembly 170 coupled to the first terminal 130 is coupled to a one side-opening in the case 160 and the second cap assembly 180 coupled to the second terminal 150 is coupled to the other side-opening in the case 160 so that the first terminal 130 and the second terminal 150 are located on both sides (e.g., opposite sides) of the case 160. The secondary battery 100 includes a first terminal 130 and a second terminal 150 on both sides, respectively, and thus, when a plurality of secondary batteries 100 are combined in a module, cooling members may be coupled to upper and lower regions of the case 160, thereby suppressing deterioration of the secondary battery 100 and improving cooling performance.

In a state in which long side surfaces of the plurality of secondary batteries 100 face each other, the first terminals and/or second terminals of the secondary batteries 100, respectively exposed to both sides, may be electrically connected.

In the secondary battery 100, the first terminal 130 and the second terminal 150 are provided on both sides, and thus, when a plurality of secondary batteries 100 are combined in a module, a charge/discharge current flows along each terminal in both directions, thereby ameliorating deterioration, compared to an example in which two terminals are provided on one side (e.g., the same side) and a charge/discharge current flows charge/discharge current along the two terminals. When a plurality of secondary batteries 100 are combined in a module, the respective terminals may be connected in both directions, and thus, space utilization can be improved.

As described above, in the secondary battery according to embodiments of the present invention, an insulating member and a current collector can be easily coupled to each other, an electrolyte can be easily injected through a hole provided in the insulating member, and movement of the electrode assembly can be prevented.

In addition, in the secondary battery according to embodiments of the present invention, a first terminal and a second terminal are provided on both sides thereof, respectively, and thus, even when a plurality of secondary batteries are combined in a module, cooling members may be coupled to upper and lower regions of a case, respectively, thereby suppressing deterioration of the secondary batteries and improving cooling performance.

In addition, in the secondary battery according to embodiments of the present invention, a first terminal and a second terminal are provided on both sides, and thus, when a plurality of secondary batteries are combined in a module, a charge/discharge current flows along each terminal in both directions, thereby ameliorating deterioration caused by the charge/discharge current and improves space utilization.

While the present invention has been described according to embodiments of the secondary battery, it should be understood that the embodiments described herein should be considered in a descriptive sense and not for purposes of limitation. Further, various changes in form and details may be made to the described embodiments without departing from the scope of the present invention as defined by the appended claims and their equivalents.

It is clear for one of ordinary skill in the art that the disclosed embodiments can be combined where possible.

## Claims

1. A secondary battery (100) comprising:
an electrode assembly (110) having a first electrode tab and a second electrode tab respectively exposed at opposite sides thereof;
a case (160) accommodating the electrode assembly (110) and having two open sides;
a first cap plate (171) sealing one of the two open sides of the case (160) and having an electrolyte injection hole;
a first terminal (130) electrically connected to the first electrode tab and exposed to the outside of the first cap plate (171); and
a first insulating member (175) interposed between the first cap plate (171) and the electrode assembly (110) and having a through hole at a side corresponding to the electrolyte injection hole.

2. The secondary battery (100) of claim 1, further comprising a first current collector (120) electrically connecting the first electrode tab exposed at one side of the electrode assembly (110) and the first terminal (130).

3. The secondary battery (100) of claim 2, wherein the first current collector (120) comprises:
a first electrode connection part (121) contacting and coupled to a first electrode tab exposed at one side of the electrode assembly (110); and
a first terminal connection part (122) having one end coupled to the first electrode connection part (121) by welding and another end coupled to the first terminal (130) by welding.

4. The secondary battery (100) of claim 3, wherein the first electrode connection part (121) is a metal plate extending along a first direction and comprises:
a first connection part (121a) welded in contact with one side of the electrode assembly (110); and
a first center part (121b) bent from the first connection part (121a), protruding toward the first cap plate (171) compared to the first connection part (121a), and spaced apart from one side surface of the electrode assembly (110).

5. The secondary battery (100) of claim 4, wherein the first connection part (121a) is on both sides of the first electrode connection part (121) in the first direction around the first center part (121b).

6. The secondary battery (100) of claim 4 or 5, wherein the first insulating member (175) further comprises first fixing protrusions (175e) protruding toward the first current collector (120),
wherein the first fixing protrusions (175e) are fixing hooks, and
wherein the first fixing protrusions (175e) are hooked and fixed at both sides of the first center part (121b).

7. The secondary battery (100) of any one of claims 4 to 6, wherein the first insulating member (175) comprises:
first body parts (175a) on both sides in the first direction around an opening hole (175c) penetrating the first terminal connection part (122) and interposed between the first connection part (121a) and the first cap plate (171);
first support parts (175b) having a height in a second direction along outer peripheries of the first body parts (175a);
first side parts (175d) connected between the first support parts (175b) and on both sides of the opening hole (175c) in a third direction; and
the first fixing protrusions (175e) protruding from the first side parts (175d) toward the first current collector (120).

8. The secondary battery (100) of claim 7, wherein the first body parts (175a), on both sides, have a through hole.

9. The secondary battery (100) of any one of the preceding claims, wherein the first terminal (130) comprises:
a first inner terminal plate (131) inside the first cap plate (171);
a first outer terminal plate (133) outside the first cap plate (171); and
a first terminal pillar (132) coupled to the first inner terminal plate (131) from the inside of the first cap plate (171), extending through the first cap plate (171), and coupled to the first outer terminal plate (133) from the outside of the first cap plate (171).

10. The secondary battery (100) of claim 9, wherein a first inner insulating member (172) is interposed between the first inner terminal plate (131) and the first cap plate (171).

11. The secondary battery (100) of claim 9 or 10, wherein a first outer insulating member (174) is interposed between the first outer terminal plate (133) and the first cap plate (171).

12. The secondary battery (100) of any one of claims 9 to 11, wherein a first seal gasket (173) is interposed between the first terminal pillar (132) and the first cap plate (171) to seal a space between the first terminal (130) and the first cap plate (171).

13. The secondary battery (100) of any one of the preceding claims, further comprising:
a second cap plate (181) sealing the other one of the two open sides of the case (160);
a second terminal (150) electrically connected to the second electrode tab and exposed to an outside of the second cap plate (181); and
a second current collector (140) electrically connecting the second electrode tab and the second terminal (150).

14. The secondary battery (100) of claim 13, configured such that, in a state in which long side surfaces of the plurality of secondary batteries (100) face each other, the first terminals (130) and/or second terminals (150) of the secondary batteries (100), respectively exposed to both sides, are electrically connected.

15. The secondary battery (100) of any one of the preceding claims, wherein a plurality of electrode assemblies (110) are stacked such that long sides of the electrode assemblies (110) are adjacent to each other and accommodated in the case (160).
